# EUROPÄISCHE PATENTANMELDUNG

(11) **EP 3 945 263 A1**
(43) Veröffentlichungstag der Anmeldung: **02.02.2022**
(21) Anmeldenummer: 21188049.7
(22) Anmeldetag: 27.07.2021
(51) Int. Cl.: F24F 13/072, F24F 13/06, F24F 13/26

(54) **LÜFTUNGSVORRICHTUNG**

(30) Priorität: 29.07.2020 EP 20188283
(71) Anmelder: KST AG, 8840 Einsedeln (CH)
(72) Erfinder: SCHÖNBÄCHLER, Beat, 8630 Rüti (CH)
(74) Vertreter: Troesch Scheidegger Werner AG

(57) **Zusammenfassung**

Eine Lüftungsvorrichtung zur Installation in einem Raum (9), umfassend ein Gehäuse (1) mit mindestens einer Luftzufuhr (2) und mindestens einer Luftdüse (3), wobei im Betrieb, Frischluft durch die mindestens eine Luftzufuhr (2) dem Gehäuse (1) zuführbar ist, durch mindestens einen ersten Kanal (10) von der mindestens einen Luftzufuhr (2) zur mindestens einen Luftdüse (3) führbar ist und durch die mindestens eine Luftdüse (3) aus dem Gehäuse (1) abführbar ist, wobei das Gehäuse (1) mindestens eine Ansaugöffnung (4) zur Ansaugung von Umgebungsluft aufweist, welche mit dem mindestens einen ersten Kanal (10) in Verbindung steht, und wobei das Gehäuse (1) derart ausgestaltet ist, dass im Betrieb, im Bereich der mindestens einen Ansaugöffnung (4), im mindestens einen ersten Kanal (10) ein gegenüber dem Umgebungsdruck geringerer Druck erzeugbar ist, wodurch Umgebungsluft durch die mindestens eine Ansaugöffnung (4) in den mindestens einen ersten Kanal (10) saugbar ist.

## Beschreibung

### TECHNISCHES GEBIET

Die vorliegende Erfindung betrifft eine Lüftungsvorrichtung, insbesondere eine Raumlüftung mit erhöhtem Wärmeübergangswert.

### STAND DER TECHNIK

Bei Raumlüftungen mit Kühlung erhöht sich der Wirkungsgrad der Kühlung, wenn der Wärmeübergangswert zwischen der Lüftungsvorrichtung und dem zu kühlenden Raum erhöht wird. Beispielsweise umfasst eine solche Lüftungsvorrichtung eine Kühldecke mit Kühlleitungen. Je grösser die Temperaturdifferenz zwischen der Lüftungsvorrichtung und dem zu kühlenden Raum ist, desto grösser ist der Wärmeübergangswert. Da die dem Raum durch die Lüftungsvorrichtung zugeführte Frischluft im Vergleich zur Raumluft kühler ist und sich im Bereich der Lüftungsvorrichtung mit dieser mischt, ist die Raumluft im Bereich der Lüftungsvorrichtung kühler als in den übrigen Bereichen des Raumes. Dementsprechend niedrige Wärmeübergangswerte zwischen der Lüftungsvorrichtung und dem zu kühlenden Raum sind zu erwarten. Je tiefer die Temperatur der in den Raum einströmenden Luft, desto grösser ist das Zugluftrisiko, d.h. dass sich im Raum befindliche Personen einen kühlen Luftzug verspüren.

Um Wärmeübergang der Lüftungsvorrichtung zu erhöhen und um das Zugluftrisiko zu reduzieren, muss die Temperatur der in den Raum einströmenden Luft erhöht werden.

Aus dem Stand der Technik sind Lüftungsvorrichtungen bekannt, bei welcher Frischluft über einen Wärmetauscher mit Raumluft erwärmt wird.

Solche Vorrichtungen sind aufwändig in der Konstruktion und dementsprechend teuer in der Herstellung und im Unterhalt.

### BESCHREIBUNG DER ERFINDUNG

Eine Aufgabe der vorliegenden Erfindung besteht darin, eine Lüftungsvorrichtung bereitzustellen, welche eine effiziente und kostengünstige Erwärmung der Frischluft ermöglicht und gleichzeitig das Zugluftrisiko verringert.

Diese Aufgabe wird durch eine Lüftungsvorrichtung mit den Merkmalen des Anspruchs 1 gelöst. Weitere Ausführungsformen der Lüftungsvorrichtung sind durch die Merkmale von weiteren Ansprüchen definiert.

Eine erfindungsgemässe Lüftungsvorrichtung zur Installation in einem Raum umfasst ein Gehäuse mit mindestens einer Luftzufuhr und mindestens einer Luftdüse, wobei im Betrieb, Frischluft durch die mindestens eine Luftzufuhr dem Gehäuse zuführbar ist, durch mindestens einen ersten Kanal von der mindestens einen Luftzufuhr zur mindestens einen Luftdüse führbar ist und durch die mindestens eine Luftdüse aus dem Gehäuse abführbar ist. Das Gehäuse weist mindestens eine Ansaugöffnung zur Ansaugung von Umgebungsluft auf, welche mit dem mindestens einen ersten Kanal in Verbindung steht, und das Gehäuse ist derart ausgestaltet, dass im Betrieb, im Bereich der mindestens einen Ansaugöffnung, im mindestens einen ersten Kanal ein gegenüber dem Umgebungsdruck geringerer Druck erzeugbar ist, wodurch Umgebungsluft durch die mindestens eine Ansaugöffnung in den mindestens einen ersten Kanal saugbar ist. Für die Ansaugung, bzw. die Induktion der Umgebungsluft wird der Venturi-Effekt genutzt. Die angesaugte Umgebungsluft, bzw. Raumluft mischt sich mit der Frischluft, wodurch eine Temperatur, der in den zu kühlenden Raum einströmenden Luft erreicht werden kann, welche höher ist als diejenige der Frischluft. Eine erhöhte Temperatur der einströmenden Luft führt zu erhöhten Wärmeübergangszahlen zwischen der einströmenden Luft und der Lüftungsvorrichtung oder sich im Einströmbereich befindlichen Drittbauteilen. Üblicherweise sind Lüftungsvorrichtungen Blechkonstruktionen aus Stahl oder Aluminium. Alternativ kann die Lüftungsvorrichtung ein gegossenes oder verschraubtes Gehäuse aufweisen. Alternativ kann die Lüftungsvorrichtung zumindest teilweise aus Kunststoff oder faserverstärktem Kunststoff gefertigt sein.

In einer Ausführungsform ist, der mindestens eine erste Kanal durch mindestens eine Seitenwand des Gehäuses begrenzt oder der mindestens eine erste Kanal ist durch mindestens eine Trennwand begrenzt, welche sich zumindest teilweise im Gehäuseinnern erstreckt. Jede Seitenwand steht im Kontakt mit der Umgebung und jede Trennwand ist im Gehäuseinnern beabstandet zu mindestens einer der Seitenwände. Die mindestens eine Trennwand kann gemeinsam einstückig mit mindestens einer der Seitenwände ausgebildet sein.

In einer Ausführungsform ist im ersten Kanal eine Blende angeordnet, durch welche im ersten Kanal, im Betrieb eine gleichmässig ausgebildete Strömung realisierbar ist. Die Blende kann als Einsatz ausgebildet sein oder kann gemeinsam einstückig mit einer Seitenwand oder mit einer Trennwand ausgebildet sein. Die Blende kann stirnseitige Öffnungen, in der Form von Löchern oder Schlitzen umfassen, wobei durchgehende Kanäle, die Öffnungen auf der Anströmseite mit denjenigen der Abströmseite verbinden. Es können mehrere Löcher oder Schlitze, regelmässig oder unregelmässig über den Querschnitt verteilt vorgesehen sein. Beispielsweise kann die Blende eine Wabenkonstruktion umfassen. Alternativ kann sich ein Schlitz im Wesentlichen über den gesamten Querschnitt erstrecken.

In einer Ausführungsform ist die mindestens eine Ansaugöffnung in mindestens einer der Seitenwände angeordnet und/oder die mindestens eine Ansaugöffnung ist in mindestens einer der Trennwände angeordnet.

In einer Ausführungsform ist die mindestens eine Ansaugöffnung benachbart zur Luftdüse und/oder zur Luftzufuhr angeordnet. Alternativ oder zusätzlich kann die Ansaugöffnung im Bereich zwischen der Luftzufuhr und der Luftdüse angeordnet sein. Grundsätzlich kann die Ansaugöffnung in jeder Wand des Gehäuses angeordnet werden, welche den ersten Kanal begrenzt oder von welcher aus eine Fluidverbindung zum ersten Kanal herstellbar ist.

In einer Ausführungsform ist anschliessend an die Ansaugöffnung eine Auskragung vorgesehen, welche sich vom ersten Kanal weg erstreckt. Alternativ oder zusätzlich ist anschliessend an die Ansaugöffnung eine Einkragung vorgesehen, welche sich in den ersten Kanal hinein erstreckt. Die Auskragung, bzw. die Einkragung kann sich zumindest teilweise um den Umfang der Ansaugöffnung erstrecken. Alternativ können die Auskragung und/oder die Einkragung geschlossen ausgeführt sein und sich um den gesamten Umfang der Ansaugöffnung erstrecken. Alternativ können sie mehrere am Umfang verteilte Abschnitte umfassen. Beispielsweise können die Auskragungen und/oder Einkragungen auf sich gegenüberliegenden Bereichen der Ansaugöffnung angeordnet sein, wobei die dazwischenliegenden Bereiche keine Aus-, bzw. Einkragungen aufweisen. Beispielsweise befinden sich die Aus-, bzw. Einkragungen in den Bereichen des Umfangs der Ansaugöffnung, welche mit der Längsachse des ersten Kanals ausgerichtet sind.

In einer Ausführungsform umfasst die Auskragung und/oder die Einkragung einen Versatz und/oder eine Rampe. Wiederum können sich sowohl der Versatz wie auch die Rampe über einen Teil oder über den gesamten Umfang der Ansaugöffnung erstrecken. Beispielsweise können Bereiche mit unterschiedlichen Versätzen oder unterschiedlichen Rampen vorgesehen sein. Es können mehrere Versätze oder Rampen aneinander anschliessend vorgesehen sein, wobei die Rampen unterschiedliche Steigungen aufweisen können. Beispielsweise können sich Versätze und Rampen abwechseln. So kann auf eine erste Rampe, ein erster Versatz folgen und auf diesen eine zweite Rampe. Die Rampen können geradlinig oder gekrümmt ausgebildet sein.

In einer Ausführungsform umfasst die Einkragung einen zweiten Kanal, welcher im Innern des ersten Kanals eine stirnseitig Kanalöffnung aufweist. Alternativ weist der zweite Kanal eine längsseitig angeordnete Kanalöffnung auf. Die Kanalöffnung kann als Loch ausgebildet sein, wobei sich mehrere Löcher entlang der Längsachse des zweiten Kanals angeordnet sein können. Alternativ kann die Kanalöffnung als Schlitz ausgeführt sein, wobei sich mehrere Schlitze entlang der Längsachse des zweiten Kanals erstrecken können oder wobei sich ein einziger Schlitz über zumindest einen Teil der Länge des zweiten Kanals erstreckt. Anschliessend an die Kanalöffnung können Auskragungen und/oder Einkragungen vorgesehen sein, wobei die Auskragungen in den ersten Kanal ragen und wobei die Einkragungen in den zweiten Kanal ragen. Beispielsweise kann sich der zweite Kanal quer durch den ersten Kanal hindurcherstrecken und eine oder mehrere längsseitig angeordnete Kanalöffnungen aufweisen, wobei die mindestens eine Kanalöffnungen in der in die Strömungsrichtung gerichtete Seite des zweiten Kanals angeordnet ist.

In einer Ausführungsform umfasst die mindestens eine Seitenwand und/oder die mindestens eine Trennwand mindestens eine Einbuchtung, welche sich in den Kanal hinein erstreckt und in welcher die mindestens eine Ansaugöffnung angeordnet ist. Die Einbuchtung kann mindestens einen Versatz und/oder mindestens eine Rampe umfassen, wobei die Rampen geradlinig oder gekrümmt ausgebildet sein können. Es können mehrere Einbuchtungen entlang der Längsrichtung des ersten Kanals hintereinander angeordnet sein. Beispielsweise umfasst die Einbuchtung eine erste Rampe, durch welche sich der Querschnitt des ersten Kanals verringert, einen Versatz, welcher an die erste Rampe anschliesst und in welcher die Ansaugöffnung angeordnet ist und eine zweite Rampe, durch welche sich der Querschnitt des ersten Kanals vergrössert.

In einer Ausführungsform ist die mindestens eine Seitenwand und/oder die mindestens eine Trennwand zumindest abschnittsweise gerade, geneigt oder gekrümmt ausgebildet, wodurch eine zumindest abschnittsweise gerade, geneigte, gekrümmte oder spiralenförmige Ausbildung des ersten Kanals erreichbar ist. Durch diese Ausgestaltung kann eine lokale oder bereichsweise Querschnittsveränderung des ersten Kanals erreicht werden.

In einer Ausführungsform ist im ersten Kanal, im Bereich der mindestens einen Ansaugöffnung, ein Verdrängungskörper vorgesehen. Durch den Verdrängungskörper kann eine lokale oder bereichsweise Querschnittsveränderung des ersten Kanals erreicht werden. Der Verdrängungskörper kann mindestens einen Versatz und/oder mindestens eine Rampe aufweisen, wobei die Rampe geradlinig oder gekrümmt ausgeführt sein kann. Der Verdrängungskörper kann symmetrisch bezüglich einer Mittelachse oder einer Mittelebene ausgebildet sein. Alternativ kann der Verdrängungskörper asymmetrisch ausgebildet sein. Beispielsweise kann der zweite Kanal als Verdrängungskörper ausgebildet sein.

In einer Ausführungsform sind mehrere Ansaugöffnungen regelmässig oder unregelmässig verteilt auf einer gemeinsamen Kurve oder Line und/oder in einer gemeinsamen Fläche oder Ebene angeordnet. Beispielsweise können in einen zentralen Bereich des ersten Kanals oder in einem Randbereich des ersten Kanals mehr Ansaugöffnungen vorgesehen sein.

In einer Ausführungsform weist der erste Kanal, der zweite Kanal und der Verdrängungskörper einen zumindest abschnittsweise gerundeten, ovalen, kreisförmigen, vieleckigen, rechteckigen, quadratischen Querschnitt auf. Beispielsweise korrespondiert der Querschnitt des ersten Kanals mit dem Querschnitt des zweiten Kanals oder der Querschnitt des ersten Kanals korrespondiert mit dem Querschnitt des Verdrängungskörpers.

In einer Ausführungsform ist im ersten Kanal, im Bereich der Luftdüse, eine Prallplatte angeordnet, welche winklig zur Längsachse des ersten Kanals ausgerichtet ist. Alternativ oder zusätzlich ist im Bereich der Luftdüse eine Kammer im Gehäuse vorgesehen, welche auf der Seite der Luftdüse angeordnet ist, welche der Austrittsseite der Luftdüse gegenüberliegt. Somit ist im Betrieb eine seitliche Umlenkung des Luftstroms im Austrittsbereich der Luftdüse erreichbar.

In einer Ausführungsform umfasst die Lüftungsvorrichtung eine Abdeckung, welche raumseitig des Gehäuses angeordnet ist und Kühlelemente, welche auf der raumabgewandten Seite der Abdeckung angeordnet sind. Die Abdeckung, sowie die Kühlelemente können mit dem Gehäuse fest verbunden sein oder diese Elemente können mit einem Bereich des Raumes fest verbunden sein, beispielsweise mit der Decke oder einer Seitenwand des Raumes. Die Kühlelemente können Wasser- oder Luft-gekühlte Leitungen umfassen. Die Abdeckung kann beispielsweise eine Lochplatte sein. Geschlossenflächige Platten können ebenfalls eingesetzt werden.

Die erwähnten Ausführungsformen der Lüftungsvorrichtung lassen sich in beliebiger Kombination einsetzen, sofern sie sich nicht widersprechen.

### KURZE BESCHREIBUNG DER FIGUREN

Ausführungsbeispiele der vorliegenden Erfindung werden nachstehend anhand von Figuren noch näher erläutert. Diese dienen lediglich zur Erläuterung und sind nicht einschränkend auszulegen. Es zeigen
Fig. 1 eine erste Ausführungsform einer erfindungsgemässen Lüftungsvorrichtung im eingebauten Zustand;
Fig. 2 eine zweite Ausführungsform einer erfindungsgemässen Lüftungsvorrichtung;
Fig. 3 eine dritte Ausführungsform einer erfindungsgemässen Lüftungsvorrichtung;
Fig. 4 eine vierte Ausführungsform einer erfindungsgemässen Lüftungsvorrichtung;
Fig. 5 eine schematische Darstellung von mehreren Ansaugöffnungen mit Auskragung und Einkragung;
Fig. 6 eine schematische Darstellung einer Ansaugöffnung, welche in einer Ausnehmung angeordnet ist;
Fig. 7 eine fünfte Ausführungsform einer erfindungsgemässen Lüftungsvorrichtung;
Fig. 8 eine perspektivische Ansicht der Ausführungsformen der Figur 1;
Fig. 9 eine schematische Darstellung einer Ansaugöffnung bei einem gekrümmten Kanal;
Fig. 10 eine schematische Darstellung einer Ansaugöffnung bei einem sich weitendem Kanal;
Fig. 11 eine schematische Darstellung einer Ansaugöffnung bei einem sich abschnittweise verjüngendem Kanal mit Innenströmung;
Fig. 12 eine schematische Darstellung einer Ansaugöffnung bei einem sich abschnittweise verjüngendem Kanal mit Aussenströmung;
Fig. 13 eine perspektivische Darstellung einer Lüftungsvorrichtung mit spiralenförmigem Kanal;
Fig. 14 eine perspektivische Darstellung eines sich weitenden Gehäuses;
Fig. 15 eine schematische Darstellung von Ansaugöffnungen im Bereich der Luftzufuhr;
Figs. 16 und 17 schematische Darstellungen von Kanälen mit Verdrängungskörpern;
Fig. 18 eine perspektivische Darstellung einer Lüftungsvorrichtung mit einer Ansaugöffnung mit durchgehendem Kanal; und
Fig. 19 eine perspektivische Darstellung einer Lüftungsvorrichtung mit einem im Bereich der Ansaugöffnung verjüngten Kanal.

### DETAILLIERTE BESCHREIBUNG DER ERFINDUNG

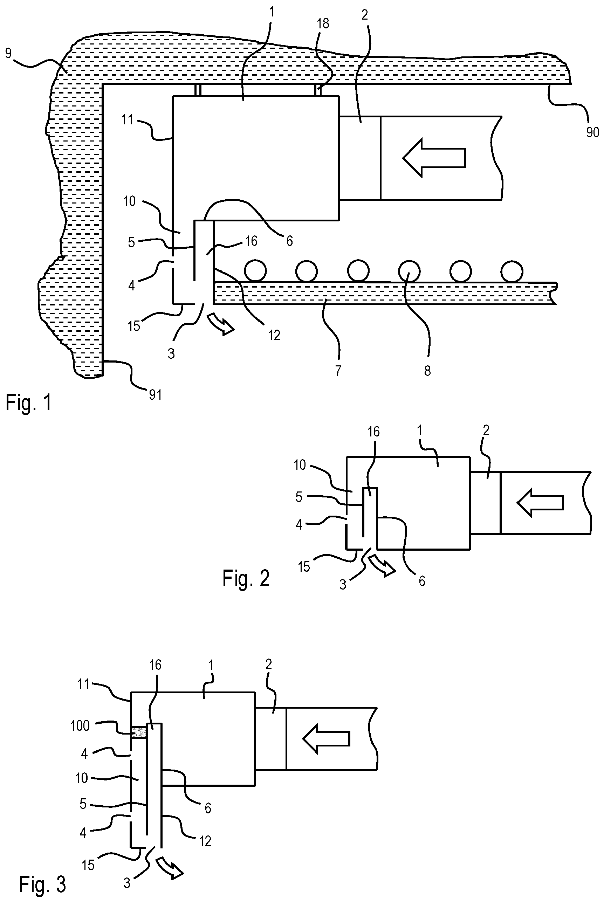

Die Figur 1 zeigt eine erste Ausführungsform einer erfindungsgemässen Lüftungsvorrichtung im eingebauten Zustand. Die Lüftungsvorrichtung umfasst ein Gehäuse 1 mit einer Luftzufuhr 2 und einer Luftdüse 3, wobei im Betrieb, Frischluft durch die Luftzufuhr 2 dem Gehäuse zuführbar ist, durch einen ersten Kanal 10 von der Luftzufuhr 2 zur Luftdüse 3 führbar ist und durch die Luftdüse 3 aus dem Gehäuse 1 abführbar ist. Das Gehäuse 1 ist mittels Befestigungen 18 am Raum 9 befestigt, wobei eine Befestigung an einer Decke 90, benachbart zu einer Wand 91, bzw. einem Fenster dargestellt ist. Im Bereich der Luftdüse 3, ist im ersten Kanal 10 eine Prallplatte 15 angeordnet, welche im Wesentlichen senkrecht zur Längsachse des ersten Kanals 10 steht. Die Prallplatte 15 bewirkt eine Umlenkung des im ersten Kanal 10 geführten Luftstroms. Der erste Kanal 10 wird aussenseitig abschnittsweise durch eine erste Seitenwand 11 des Gehäuses 1 begrenzt. Eine Ansaugöffnung 4 ist in der ersten Seitenwand 11 ausgebildet. Innenseitig wird der erste Kanal 10 durch eine erste Trennwand 5 begrenzt, welche der ersten Seitenwand 11 bezüglich dem ersten Kanal 10 gegenüberliegt. Im Bereich der Luftdüse 3 ist im Gehäuse 1 eine Kammer 16 vorgesehen, welche auf der Seite der Luftdüse 3 angeordnet ist, welche der Austrittsseite der Luftdüse 3 gegenüberliegt. Die Kammer 16 wird durch die erste Trennwand 5 vom ersten Kanal 10 abgetrennt. Eine zweite Seitenwand 12 begrenzt die Kammer 16 auf einer äusseren Seite des Gehäuses 1. Die erste und die zweite Seitenwand erstrecken sich im Wesentlichen unter einem rechten Winkel zur Strömungsrichtung der Frischluft im Bereich der Luftzufuhr 2 und bilden einen Gehäusefortsatz. Raumseitig des Gehäuses 1 ist eine Abdeckung 7 angeordnet. Kühlelemente 8 sind auf der raumabgewandten Seite der Abdeckung 7 angeordnet.

Die Figur 2 zeigt eine zweite Ausführungsform einer erfindungsgemässen Lüftungsvorrichtung, wobei das Gehäuse 1 keinen in den Raum ragenden Gehäusefortsatz umfasst. Auch diese Ausführungsform kann mittels Befestigungen in einem Raum ortsfest angeordnet werden und sie kann ebenfalls mit einer Abdeckung und Kühlelementen kombiniert werden.

Die Figur 3 zeigt eine dritte Ausführungsform einer erfindungsgemässen Lüftungsvorrichtung, wobei in der ersten Seitenwand 11 zwei Ansaugöffnungen 4 vorgesehen sind, welche entlang der Längsachse des ersten Kanals 10 in der Strömungsrichtung nacheinander angeordnet sind. Eine Blende 100 ist im ersten Kanal 10 in der Strömungsrichtung vor dem Bereich vorgesehen, in welchem die Ansaugöffnungen 4 angeordnet sind. Auch diese Ausführungsform ist mit einer Abdeckung und mit Kühlelementen kombinierbar und kann an einer Decke oder einer Wand befestigt werden.

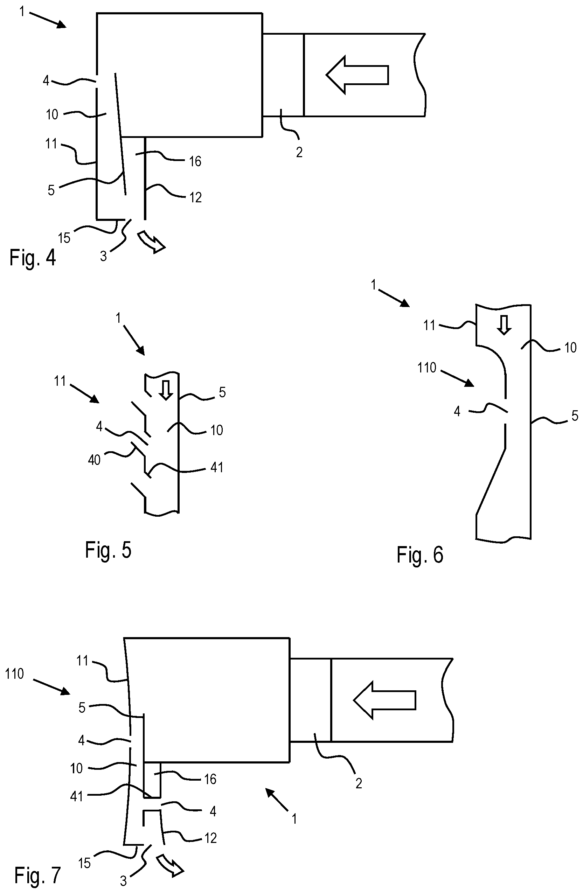

Die Figur 4 zeigt eine vierte Ausführungsform einer erfindungsgemässen Lüftungsvorrichtung, bei welcher die erste Trennwand 5 geneigt bezüglich der ersten Seitenwand 11 ausgebildet ist, wodurch sich der erste Kanal 10 in der Strömungsrichtung weitet.

Die Figur 5 zeigt eine schematische Darstellung von mehreren Ansaugöffnungen 4 mit Auskragung 40 und Einkragung 41, welche entlang der Strömungsrichtung hintereinander angeordnet sind. Die Auskragungen 40 sind an der in der Strömungsrichtung liegenden Seite der Ansaugöffnung 4 vorgesehen. Sie erstrecken sich entgegen der Strömungsrichtung winklig von der ersten Seitenwand 11 weg nach aussen. Die Einkragungen 31 sind an der gegen die Strömungsrichtung liegenden Seite des Umfangs der Ansaugöffnungen 4 vorgesehen. Sie erstrecken sich mit der Strömungsrichtung winklig von der ersten Seitenwand 11 weg nach innen in den ersten Kanal 10.

Die Figur 6 zeigt eine schematische Darstellung einer Ansaugöffnung, welche in einer Ausnehmung 110 der ersten Seitenwand 11 angeordnet ist. Die Ausnehmung kann in allen anderen Seitenwänden des Gehäuses ebenfalls vorgesehen werden. Die Ausnehmung umfasst eine erste gekrümmte Rampe, durch welche sich der Querschnitt des ersten Kanals 10 verjüngt. Anschliessend an die gekrümmte Rampe ist ein Versatz vorgesehen, in welchem die Ansaugöffnung 4 ausgebildet ist. An den Bereich des Versatzes ist anschliessend eine zweite, geradlinig verlaufende Rampe vorgesehen, wodurch sich der Querschnitt des ersten Kanals 10 aufweitet. In der dargestellten Ausführungsform weitet sich der Querschnitt auf das Mass, welches der erste Kanal vor der Ausnehmung aufwies.

Die Figur 7 zeigt eine fünfte Ausführungsform einer erfindungsgemässen Lüftungsvorrichtung mit einer kontinuierlich gekrümmten ersten Seitenwand 11, wobei die Ansaugöffnung 4 in dem Bereich der ersten Seitenwand 11 angeordnet ist, welche den geringsten Abstand zur ersten Trennwand 5 aufweist. D.h. in dem Bereich, in welchem der Querschnitt des ersten Kanals 10 am kleinsten ist. An der nach unten ragenden zweiten Seitenwand 12 des Gehäuses 1 ist eine weitere Ansaugöffnung 4 vorgesehen, welche durch eine Einkragung 41 in der Form eines geschlossenen zweiten Kanals mit dem ersten Kanal fluidverbunden ist.

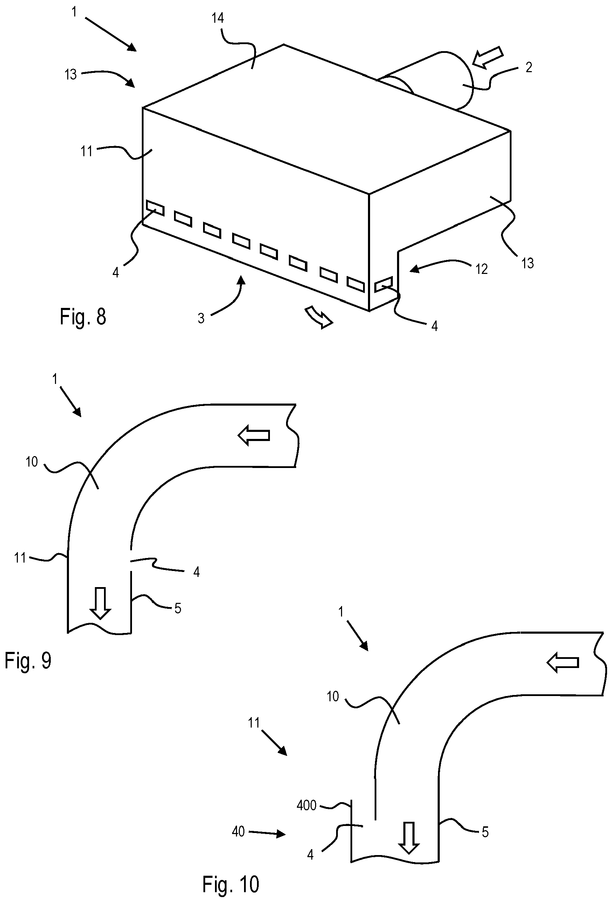

Die Figur 8 zeigt eine perspektivische Ansicht der Ausführungsformen der Figur 1. In der dargestellten Ansicht wird Frischluft über die Luftzufuhr 2 rückseitig dem Gehäuse 1 zugeführt. Anschliessend an die Luftzufuhr 2 ist der erste Kanal seitlich durch dritte Seitenwände 13 und oben durch eine vierte Seitenwand 14 begrenzt. Die Ansaugöffnungen 4 sind in der ersten Seitenwand 11 und den beiden dritten Seitenwänden 13 in einer zur Strömungsrichtung in diesem Bereich senkrechten Ebene angeordnet.

Die Figur 9 zeigt eine schematische Darstellung einer Ansaugöffnung 4, welche bei einem gekrümmten Kanal 10 in der Strömungsrichtung am Ende des gekrümmten Teils auf der Kanalinnenseite angeordnet ist.

Die Figur 10 zeigt eine schematische Darstellung einer Ansaugöffnung bei einem sich weitendem Kanal. Der Kanal 10 umfasst einen ersten geraden Abschnitt, einen daran anschliessenden gekrümmten Abschnitt und einen an diesen anschliessenden geraden Abschnitt. Die Ansaugöffnung 4 umfasst eine Auskragung 40 mit einem Versatz 400, wodurch sich die Aufweitung des Kanals ergibt. Die Kanalweitung ist auch mit zumindest teilweise winkligen oder geraden Kanälen kombinierbar.

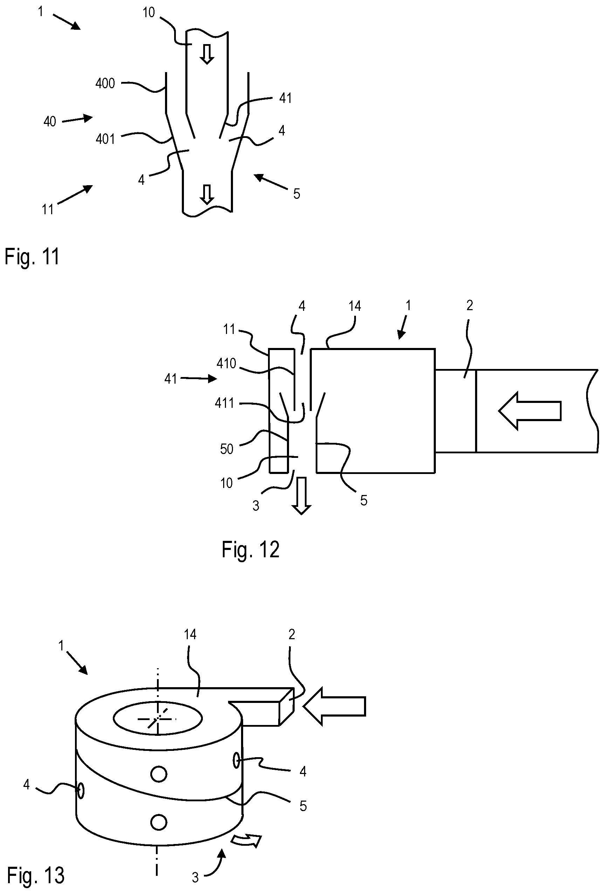

Die Figur 11 zeigt eine schematische Darstellung einer Ansaugöffnung 4 bei einem sich abschnittweise verjüngendem Kanal 10 mit Innenströmung. D.h. die Frischluft strömt im ersten Kanal 10, der mindestens zwischen zwei sich gegenüberliegend angeordneten Ansaugöffnungen 4 angeordnet ist. Alternativ kann der erste Kanal 10 gerundet ausgebildet sein und die Ansaugöffnung 4 ist als geschlossen umlaufender Ringspalt ausgebildet. Die Ansaugöffnung 4 umfasst eine Auskragung 40 und eine Einkragung 41, wobei die Auskragung 40 einen Versatz 400 und eine Rampe 401 umfasst. Die Einkragung umfasst eine Rampe. Diese Bauweise ist bei gerundeten oder eckigen Kanalquerschnitten einsetzbar. Ebenfalls ist es möglich eine oder mehrere solcher Einheiten als Einsätze in einem Gehäuse anzuordnen.

Die Figur 12 zeigt eine schematische Darstellung einer Ansaugöffnung 4 bei einem sich abschnittweise verjüngendem Kanal 10 mit Aussenströmung. D.h. die Frischluft strömt im ersten Kanal 10, der einen zweiten Kanal 410, welcher mit der Ansaugöffnung 4 verbunden ist, mindestens auf zwei sich gegenüberliegenden Seiten umgibt. Der erste Kanal 10 ist auf diesen zwei Seiten, auf einer Seite durch eine erste Trennwand 5 begrenzt und ist auf der gegenüberliegenden Seite durch eine zweite Trennwand 50 begrenzt. Der zweite Kanal 410 erstreckt sich von der in einer vierten Seitenwand 14 angeordneten Ansaugöffnung 4 und weist eine stirnseitige Kanalöffnung 411 auf, welche im Wesentlichen auf einer Mittelachse des ersten Kanals 10 angeordnet ist. Der erste Kanal 10 kann gerundet ausgebildet sein und durch eine geschlossen umlaufende Trennwand 5;50 begrenzt sein. In diesem Fall ist auch der zweite Kanal 410 gerundet und im Wesentlichen zentrisch im ersten Kanal 10 angeordnet. Der erste Kanal 10 und der zweite Kanal 410 können als Einsätze ausgebildet sei und ein oder mehrere solcher Einsätze können in einem Gehäuse angeordnet sein.

Die Figur 13 zeigt eine perspektivische Darstellung einer Lüftungsvorrichtung mit spiralenförmigem Kanal. Die Luftzufuhr 2 strömt angrenzend an die vierte Seitenwand 14 im Wesentlichen tangential in das Gehäuse 1. Das Gehäuse hat eine im Wesentlichen zylindrische Aussenform und umfasst eine dazu konzentrisch angeordnete im Wesentlichen zylindrische Ausnehmung, wodurch sich zwischen der äusseren Seitenwand und der inneren Seitenwand ein Ringspalt ergibt. Im Ringspalt ist eine erste Trennwand 5 spiralenförmig angeordnet, wodurch sich ein spiralenförmiger erster Kanal ergibt, der sich von der Luftzufuhr 2 zur Luftdüse 3 erstreckt. In der dargestellten Figur sind mehrere Ansaugöffnungen 4 entlang des spiralenförmigen Kanals, auf dessen Aussenseite angeordnet. Alternativ können die Ansaugöffnungen auch auf der Innenseite angeordnet sein.

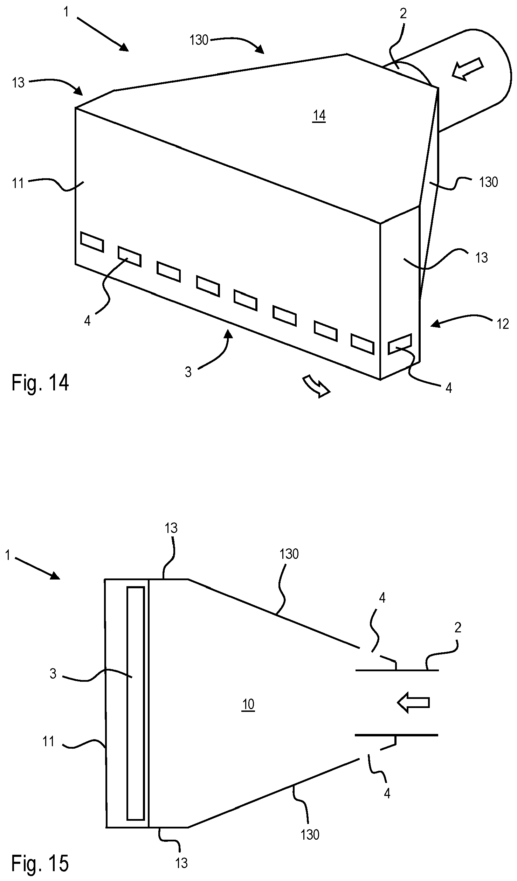

Die Figur 14 zeigt eine perspektivische Darstellung eines sich weitenden Gehäuses 1. Des Gehäuse 1 umfasst eine geneigte Seitenwand 130, welche sich von der Luftzufuhr 2 in Richtung der Luftdüse 3, bzw. in Richtung der ersten Seitenwand 11 erstreckt, wodurch sich ein sich weitender Kanal ergibt, welcher abschnittsweise durch eine sich weitende vierte Seitenwand 14 begrenzt ist. Ansaugöffnungen 4 sind in Seitenwänden 11;13 angeordnet, welche an die Luftdüse 3 angrenzen.

Die Figur 15 zeigt eine schematische Darstellung von Ansaugöffnungen 4 im Bereich der Luftzufuhr 2, wobei geneigte Seitenwände 130 beidseitig and den Bereich der Luftzufuhr 2 angrenzen. Die geneigten Seitenwände 130 erstrecken sich zu den beiden seitlichen dritten Seitenwänden 13. Die beiden geneigten Seitenwände 130 begrenzen beidseitig den sich weitenden ersten Kanal 10. Die Ansaugöffnungen 4 sind benachbart zur Luftzufuhr 2 in den geneigten Seitenwänden 130 angeordnet.

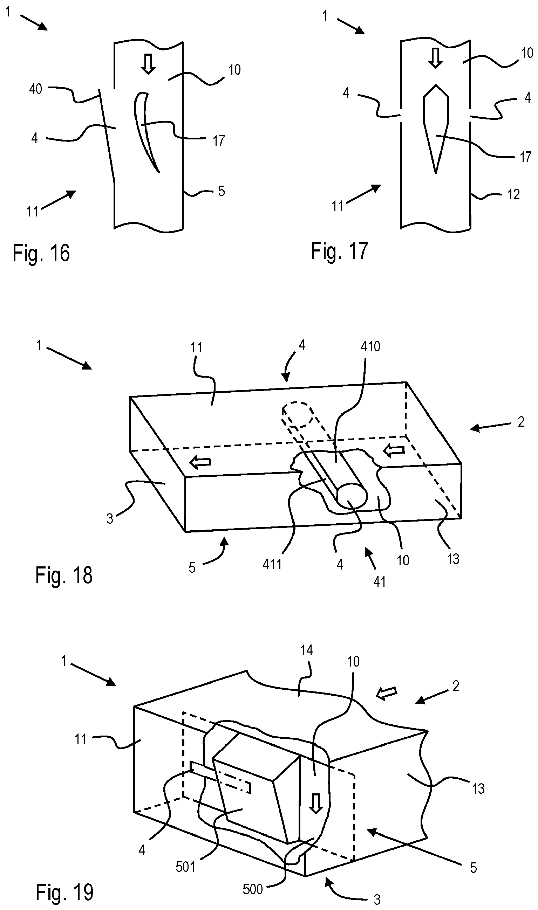

Die Figuren 16 und 17 zeigen schematische Darstellungen von Kanälen 10 mit Verdrängungskörpern 17, wobei die Verdrängungskörper 17 im Bereich der Ansaugöffnungen 4 im Kanalinnern angeordnet sind. Bei der in der Figur 16 dargestellten Ausführungsform umfasst die Ansaugöffnung 4 eine rampenförmige Auskragung 40, welche sich von der ersten Seitenwand 11 aus erstreckt. Der Verdrängungskörper 17 ist weist die Form eines Flügelprofils auf. Beispielsweise ist die Nullauftriebslinie des Flügelprofils im Wesentlichen parallel zur rampenförmigen Auskragung 40 ausgerichtet. Flügelförmige Verdrängungskörper 17 eignen sich für den Einsatz in eckigen Kanälen 10. Bein einer einfachen Konstruktion erstrecken sich die Verdrängungskörper zwischen den beiden seitlichen dritten Seitenwänden 13 des Gehäuses 1. Der in der Figur 17 dargestellte Verdrängungskörper 17 ist symmetrisch bezüglich der Kanalmittachse ausgebildet und umfasst einen sich konisch weitenden ersten Abschnitt, einen Mittelabschnitt konstanter Dicke und einen sich konisch verjüngenden dritten Abschnitt. Die Ansaugöffnungen 4 sind im Bereich des Mittelabschnitts in den entsprechenden Seitenwänden 11;12 angeordnet. Diese Bauweise eignet sich sowohl für eckige Kanäle wie auch für gerundete Kanäle. Bei gerundeten Kanälen kann der erste Kanal 10 rund ausgebildet sein und der Verdrängungskörper 17 kann zentrisch im ersten Kanal 10 angeordnet sein und einen Mittelabschnitt mit entsprechend rundem Querschnitt umfassen, wodurch sich zwischen den Seitenwänden 11;12 und dem Verdrängungskörper 17 ein geschlossen umlaufender Ringspalt ergibt. Der Verdrängungskörper 17 kann mit nicht dargestellten Befestigungselementen an den Seitenwänden 11;12 befestigt sein.

Die Figur 18 zeigt eine perspektivische Darstellung einer Lüftungsvorrichtung mit einer Ansaugöffnung 4 mit einem durchgehenden zweiten Kanal 410, welcher sich zwischen den beiden sich gegenüberliegenden dritten Seitenwänden 13 des Gehäuses 1 erstreckt. Der zweite Kanal 410 umfasst in seiner in die Strömungsrichtung gerichteten Seite eine schlitzförmige Kanalöffnung 411, welche sich im Wesentlichen entlang der gesamten Länge des zweiten Kanals 410 erstreckt.

Die Figur 19 zeigt eine perspektivische Darstellung einer Lüftungsvorrichtung mit einem im Bereich der Ansaugöffnung 4 verjüngten Kanal 10. Die erste Trennwand 5 umfasst einen ebenen ersten Bereich 500 und einen aus dieser Ebene ragenden zweiten Bereich 501, wodurch sich zwischen der ersten Seitenwand 11 und dem zweiten Bereich 501 der ersten Trennwand 5 eine Verjüngung des ersten Kanals 10 ergibt. Der zweite Bereich 501 umfasst einen rampenförmigen ersten Abschnitt und einen rampenförmigen zweiten Abschnitt. Die dargestellten Rampen sind geradlinig und diskret. Alternativ können die Rampen gekrümmt ausgebildet sein und der Übergang zwischen zwei benachbarten Abschnitten kann kontinuierlich ausgestaltet sein. Es ist ebenfalls möglich, dass sich der zweite Bereich 501 im Wesentlichen über die gesamte Kanalbreite erstreckt. Diese Bauweise kann mit mehreren Ansaugöffnungen eingesetzt werden, welche gleichmässig verteilt über die Kanalbreite angeordnet sind oder mit einer Ansaugöffnung, welche sich im Wesentlichen über die gesamte Kanalbreite erstreckt.

**BEZUGSZEICHENLISTE**

| | | | |
|---|---|---|---|
| 1 | Gehäuse | 400 | Versatz |
| 10 | erster Kanal | 401 | Rampe |
| 100 | Blende | 41 | Einkragung |
| 11 | erste Seitenwand | 410 | zweiter Kanal |
| 110 | Einbuchtung | 411 | Kanalöffnung |
| 12 | zweite Seitenwand | 5 | erste Trennwand |
| 13 | dritte Seitenwand | 50 | zweite Trennwand |
| 130 | geneigte Seitenwand | 500 | erster Bereich |
| 14 | vierte Seitenwand | 501 | zweiter Bereich |
| 15 | Prallplatte | 6 | dritte Trennwand |
| 16 | Kammer | 7 | Abdeckung |
| 17 | Verdrängungs körper | 8 | Kühlelement |
| 18 | Befestigung | 9 | Raum |
| 2 | Luftzufuhr | 90 | Decke |
| 3 | Luftdüse | 91 | Wand/Fenster |
| 4 | Ansaugöffnung | | |
| 40 | Auskragung | | |

## Patentansprüche

1. Eine Lüftungsvorrichtung zur Installation in einem Raum (9), umfassend ein Gehäuse (1) mit mindestens einer Luftzufuhr (2) und mindestens einer Luftdüse (3), wobei im Betrieb, Frischluft durch die mindestens eine Luftzufuhr (2) dem Gehäuse (1) zuführbar ist, durch mindestens einen ersten Kanal (10) von der mindestens einen Luftzufuhr (2) zur mindestens einen Luftdüse (3) führbar ist und durch die mindestens eine Luftdüse (3) aus dem Gehäuse (1) abführbar ist, **dadurch gekennzeichnet, dass** das Gehäuse (1) mindestens eine Ansaugöffnung (4) zur Ansaugung von Umgebungsluft aufweist, welche mit dem mindestens einen ersten Kanal (10) in Verbindung steht, und dass das Gehäuse (1) derart ausgestaltet ist, dass im Betrieb, im Bereich der mindestens einen Ansaugöffnung (4), im mindestens einen ersten Kanal (10) ein gegenüber dem Umgebungsdruck geringerer Druck erzeugbar ist, wodurch Umgebungsluft durch die mindestens eine Ansaugöffnung (4) in den mindestens einen ersten Kanal (10) saugbar ist.

2. Die Lüftungsvorrichtung gemäss Anspruch 1, wobei der mindestens eine erste Kanal (10) durch mindestens eine Seitenwand (11;12;13;130;14) des Gehäuses (1) begrenzt ist oder durch mindestens eine Trennwand (5;50) begrenzt ist, welche sich zumindest teilweise im Gehäuseinnern erstreckt.

3. Die Lüftungsvorrichtung gemäss Anspruch 1 oder 2, wobei im ersten Kanal (10) eine Blende (100) angeordnet ist, durch welche im ersten Kanal (10), im Betrieb eine gleichmässig ausgebildete Strömung realisierbar ist.

4. Die Lüftungsvorrichtung gemäss einem der vorangehenden Ansprüche, wobei die mindestens eine Ansaugöffnung (4) in mindestens einer der Seitenwände (11;12;13;130;14) angeordnet ist und/oder wobei die mindestens eine Ansaugöffnung (4) in mindestens einer der Trennwände (5;50) angeordnet ist.

5. Die Lüftungsvorrichtung gemäss einem der vorangehenden Ansprüche, wobei die mindestens eine Ansaugöffnung (4) benachbart zur Luftdüse (3) und/oder zur Luftzufuhr (2) angeordnet ist.

6. Die Lüftungsvorrichtung gemäss einem der vorangehenden Ansprüche, wobei anschliessend an die Ansaugöffnung (4) eine Auskragung (40) vorgesehen ist, welche sich vom ersten Kanal (10) weg erstreckt und/oder wobei anschliessend an die Ansaugöffnung (4) eine Einkragung (41) vorgesehen ist, welche sich in den ersten Kanal (10) hinein erstreckt.

7. Die Lüftungsvorrichtung gemäss Anspruch 6, wobei die Auskragung (40) und/oder die Einkragung (41) einen Versatz (400) und/oder eine Rampe (401) umfasst.

8. Die Lüftungsvorrichtung gemäss Anspruch 6 oder 7, wobei die Einkragung (41) einen zweiten Kanal (410) aufweist, welcher im Innern des ersten Kanals (10) eine stirnseitig oder längsseitig angeordnete Kanalöffnung (411) aufweist.

9. Die Lüftungsvorrichtung gemäss einem der Ansprüche 2 bis 8, wobei die mindestens eine
Seitenwand (11;12;13;130;14) und/oder die mindestens eine Trennwand (5;50) mindestens eine Einbuchtung (110) umfasst, welche sich in den Kanal (10) hinein erstreckt und in welcher die mindestens eine Ansaugöffnung (4) angeordnet ist.

10. Die Lüftungsvorrichtung gemäss einem der Ansprüche 2 bis 19, wobei die mindestens eine
Seitenwand (11;12;13;130;14) und/oder die mindestens eine Trennwand (5;50) zumindest abschnittsweise gerade, geneigt oder gekrümmt ausgebildet ist, wodurch eine zumindest abschnittsweise gerade, geneigte, gekrümmte oder spiralenförmige Ausbildung des ersten Kanals (10) erreichbar ist.

11. Die Lüftungsvorrichtung gemäss einem der vorangehenden Ansprüche, wobei im ersten Kanal (10), im Bereich der mindestens einen Ansaugöffnung (4), ein Verdrängungskörper (17) vorgesehen ist.

12. Die Lüftungsvorrichtung gemäss einem der vorangehenden Ansprüche, wobei mehrere Ansaugöffnungen (4) regelmässig oder unregelmässig verteilt auf einer gemeinsamen Kurve oder Line und/oder in einer gemeinsamen Fläche oder Ebene angeordnet sind.

13. Die Lüftungsvorrichtung gemäss einem der vorangehenden Ansprüche, wobei der erste Kanal (10), der zweite Kanal (410) und der Verdrängungskörper (17) einen zumindest abschnittsweise gerundeten, ovalen, kreisförmigen, vieleckigen, rechteckigen, quadratischen Querschnitt aufweist.

14. Die Lüftungsvorrichtung gemäss einem der vorangehenden Ansprüche, wobei im ersten Kanal (10), im Bereich der Luftdüse (3), eine Prallplatte (15) angeordnet ist, welche winklig zur Längsachse des ersten Kanals (10) ausgerichtet ist und/oder wobei eine Kammer (16) im Gehäuse (1) vorgesehen ist, welche auf der Seite der Luftdüse (3) angeordnet ist, welche der Austrittsseite der Luftdüse (3) gegenüberliegt, wodurch im Betrieb eine seitliche Umlenkung des Luftstroms im Austrittsbereich der Luftdüse (3) erreichbar ist.

15. Die Lüftungsvorrichtung gemäss einem der vorangehenden Ansprüche, umfassend eine Abdeckung (7), welche raumseitig des Gehäuses (1) angeordnet ist und Kühlelemente (8), welche auf der raumabgewandten Seite der Abdeckung (7) angeordnet sind.
